# EUROPEAN PATENT SPECIFICATION

(11) **EP 1 015 990 B1**
(45) Date of publication and mention of the grant of the patent: **24.10.2001**
(21) Application number: 98944205.8
(22) Date of filing: 28.08.1998
(51) Int. Cl.: G06F 13/40

(54) **INTERCONNECTION CIRCUIT FOR ELECTRONIC MODULES**
VERBINDUNGSSCHALTUNG FÜR ELEKTRONISCHE MODULE
CIRCUIT DE CONNEXION POUR MODULES ELECTRONIQUES

(30) Priority: 08.09.1997 IT TO970796
(43) Date of publication of application: 05.07.2000
(73) Proprietor: Flextel S.P.A., 10015 Ivrea (IT)
(72) Inventor: DONDOLINI, Alessandro, I-16035 Rapallo (IT)
(86) International application number: IT9800238
(87) International publication number: WO9913407

(56) References cited:
- WO-A-93/15464
- US-A- 5 122 691
- US-A- 5 583 998

## Description

### Technical Field

This invention relates to an interconnection circuit for electronic modules both system and peripheral type, comprising a support suitable for constituting a data and/or commands channel (bus) segment, a plurality of connectors each associated to a plurality of connection points and each suitable for accommodating an electronic module, interconnection means for interconnecting the connection points and electronic switching means for interrupting the connection made by the interconnection means.

The invention relates more particularly to an interconnection circuit made in compliance with the PCI (Peripheral Component Interconnect bus) data and commands channel specifications called CompactPCI™, as defined by the manufacturers' committee called PICMG (PCI Industrial Computers Manufacturing Group).

### Background Art

Interconnection circuits are known, in particular wired circuits for interconnecting electronic modules in systems having a data and command channel or bus architecture.
Systems with a bus architecture generally comprise a wiring board and a plurality of connectors or slots, soldered on the board, into which the various electronic modules are inserted.
Known in particular from the CompactPCI™ PICMG 2.0 R2.0 specifications are the dimensions and the architecture of the wiring circuits for interconnecting numerous CompactPCI™ electronic modules.
According to these specifications, the general principles of which may however be extended, with the exception of a few details, to all the systems with bus architecture, a CompactPCI™ system consists of one segment for the transfer of data and commands (bus segment) which comprises a wiring board capable of housing up to a maximum of 8 slots for accommodating a like number of electronic modules.
In particular, one slot in a predefined position in each of these segments, known as the System Slot, is dedicated to accommodating a system module, or System Slot board, whereas the other slots (Peripheral Slots) are dedicated to accommodating peripheral modules.
Accordingly a bus segment in general, and a CompactPCI™ one in particular, with for instance 8 slots, may accommodate one system module in a predefined position and up to a maximum of 7 peripheral modules in as many Peripheral Slots.
In a system with bus architecture in general, or in a CompactPCI™ segment in particular, the system module and relative slot, in a fixed position, are arranged to exchange through the wiring board, all the reference signals, also called point-to-point signals, such as for example the clock signal, the interrupt signals, etc., with the peripheral modules. Accordingly the wiring board of a bus architecture system will contain not only the bus type connections, but also the so-called point-to-point connections, for interconnecting the "System Slot" with the "Peripheral Slots".

A first technical problem that may arise in a system having a bus architecture and in a CompactPCI™ segment, in particular, is that the system module can be accommodated solely in a fixed position and therefore, in the event of a system module failure, only the replacement of this module, in the "System Slot", allows system functionality to be restored, since none of the "Peripheral Slots" may be used to accommodate a system module.

A further problem that may arise in a system having a bus architecture and in a CompactPCI™ segment, in particular, is that it is not possible to reconfigure the bus segment into numerous segments, each having at least a "System Slot" and "Peripheral Slots", and, therefore, it may happen that, if a single peripheral module saturates the bus from and to the system module, the other "Peripheral Slots" present in the bus segment are unusable.

From International Publication WO 93/15464 an interconnection circuit or backplane is known for interconnecting a plurality of electronic modules.

Such a backplane comprises, associated to each Slot, a switching circuit for providing a reconfigurable backplane wherein the bus segment can be re-configured into numerous segments or clusters of Slots.

A technical problem that arises from the known reconfigurable backplane is that such a solution is not applicable to a system having a bus architecture and both bus type connections and point-to-point type connections.

Moreover, the known bus segment is configurable into numerous segments by means of a plurality of switch circuits each associated to a slot.

### Disclosure of the Invention

The object of this invention is to produce a circuit for interconnecting systems having a bus architecture that does not have the problems illustrated above.

In particular, the object of this invention is to produce a bus segment reconfigurable into numerous bus segments or sub-segments, each comprising a subset of the total number of slots included in the bus segment itself and maintaining the total functionality of the bus segment and wherein each slot can accommodate interchangeably a system module or a peripheral module.

This technical problem is solved by the interconnection circuit for electronic modules, according to the present invention, characterised in that the interconnection means comprises bus type interconnection means for sequentially interconnecting bus type connection points of the plurality of connectors and point-to-point interconnection means substantially routed as bus type interconnection means for sequentially interconnecting point-to-point connection points of said plurality of connectors and in that the electronic switching means are interposed between the connectors for selectively interrupting the connection made by the interconnection means and selectively obtaining from the bus segment a plurality of sub-segments, each comprising a subset of the connectors and at least a system module.

### Brief Description of Drawings

These and other characteristics of the present invention will become apparent in the course of the following description, provided as a non-exhaustive example of a preferred embodiment, taken in conjunction with the accompanying drawings, where:
Fig. 1 is a wiring board according to the CompactPCI™ specifications;
Fig. 2 is a logic diagram of the connections for clock signals (CLK#) according to the invention;
Fig. 3 is a logic diagram of the connections for interrupt signals (INTAöD) according to the invention; and
Fig. 4 is a logic diagram of the connections for connection request signals (REQ#) and request acknowledgement signals (GNT#) according to the invention.

### Best mode for Carrying Out the Invention

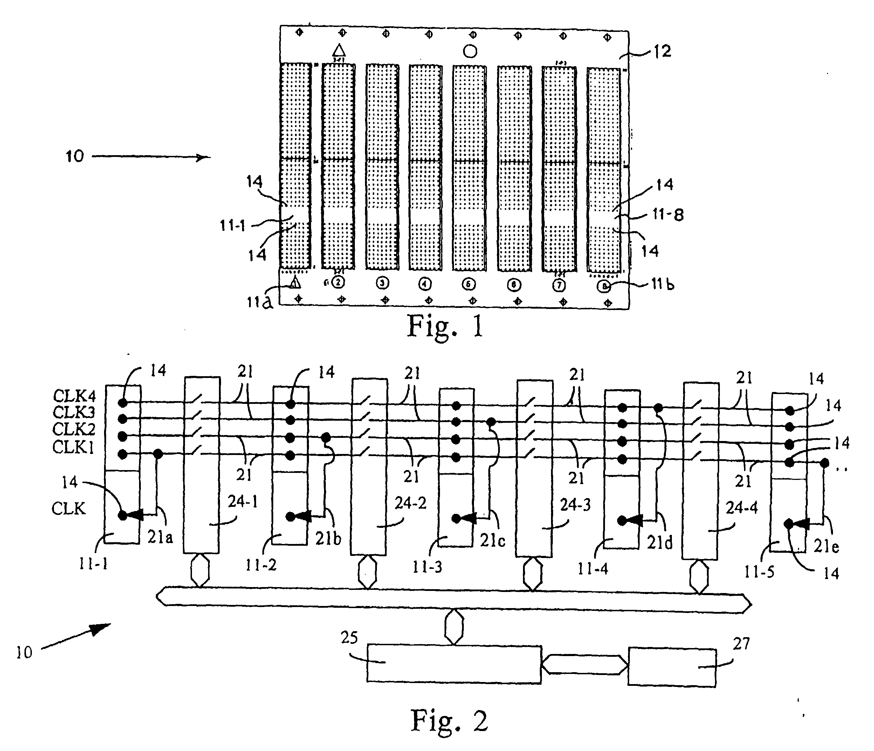

With reference to Fig. 1 a circuit for interconnecting electronic modules or bus segment 10 comprises a wiring board 12, for example made in accordance with the CompactPCI™ specifications, and a plurality of slots, for example from 11-1 to 11-8, located at predefined distances from each other and each suitable for accommodating an electronic module.
The first slot 11-1 is dedicated, for example, to accommodating a system module and is marked with a first type of reference 11a, whereas the other slots, from 11-2 to 11-8 are suitable for accommodating peripheral modules and are marked with a second type of reference 11b.
The wiring board 12 also comprises, associated with each slot, from 11-1 to 11-8, a plurality of connection points or Pins 14, suitable for exchanging electric signals between the wiring board 12 and the electronic modules, and a plurality of electric connections suitable for interconnecting the Pins 14 of the slots 11-1ö11-8.
In order to be able to place the system module in any slot 11-1ö11-8 of the bus segment 10, the electric connections between the Pins for the clock (CLK#), interrupt (INTAöD), connection request (REQ#), request acknowledge (GNT#) and
IDSEL signals, as defined by the CompactPCI™ specifications, must be made appropriately on the wiring board 12.
In particular, on a wiring board 12 made in accordance with this invention and having 5 slots (Fig.2), from 11-1 to 11-5, the connections 21 for the signals CLK# are made in the following way.
The PIN for the signal CLK1 of the first slot 11-1 is connected to the PIN for the signal CLK1 of the slot 11-2 and so on, to the last slot 11-5.

Similar type bus connections 21 are made for the Pins of the signals CLK2, CLK3 and CLK4.

In addition, in the first slot 11-1, the PIN for the signal CLK1 is connected to the PIN for the signal CLK with a first connection 21a; in the second slot 11-2, the PIN for the signal CLK2 is connected to the PIN for the signal CLK with a second connection 21b; in the third slot 11-3, the PIN for the signal CLK3 is connected to the PIN for the signal CLK with a third connection 21c; in the fourth slot 11-4, the PIN for the signal CLK4 is connected to the PIN for the signal CLK with a fourth connection 21d; in the fifth slot 11-5, a fifth connection 21e is made, similar for example to the one made in the first slot 11-1, and so on, where there are more than 5 slots present.

Naturally the alternation of the latter type of connections, from 21a to 21e may be made in any order without altering the object of placing the system module in any position or slot.

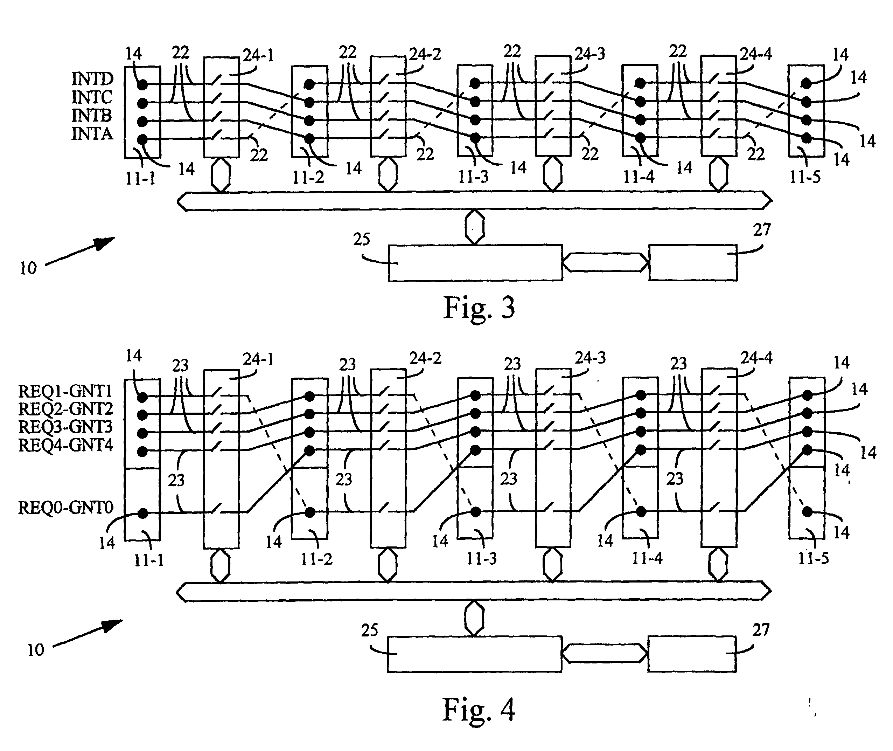

The connections 22 (Fig.3) for the signals INTAöD are made in the following way.

The PIN for the signal INTD of the first slot 11-1 is connected to the PIN for the signal INTC of the slot 11-2, and so on in sequence until the PIN for the signal INTA of the fourth slot 11-4 is connected to the PIN for the signal INTD of the last slot 11-5.

The PIN for the signal INTC of the first slot 11-1 is connected to the PIN for the signal INTB of the slot 11-2 and so on in sequence until the PIN for the signal INTD of the fourth slot 11-4 is connected to the PIN for the signal INTC of the last slot 11-5.

The PIN for the signal INTB of the first slot 11-1 is connected to the PIN for the signal INTA of the slot 11-2 and so on in sequence, in the same way as already described for the signals INTA and INTB.

The PIN for the signal INTA of the first slot 11-1 is connected to the PIN for the signal INTD of the slot 11-2 and so on in sequence, in the same way as already described for the signals INTA and INTB.

The connections 23 (Fig.4) for the signals REQ# and GNT#, described here together for simplicity's sake and confined to the signals REQ0-4 and GNT0-4 only, are made in the following way.

The Pins for the signals REQ0 and GNT0 of the *first* slot 11-1 are connected to the Pins for the signals REQ4 and

GNT4 of the slot 11-2, the latter to the Pins for the signals REQ3 and GNT3 of the slot 11-3, and so on in sequence until the Pins for the signals REQ2 and GNT2 of the slot 11-4 are connected to the Pins REQ1 and GNT1 of the last slot 11-5.

Similarly, the Pins for the signals REQ1 and GNT1 of the first slot 11-1 are connected to the Pins for the signals REQ0 and GNT0 of the slot 11-2, the latter to the Pins for the signals REQ4 and GNT4 of the slot 11-3, and so on in sequence, until the Pins for the signals REQ3 and GNT3 of the slot 11-4 are connected to the Pins REQ2 and GNT2 of the last slot 11-5.

Similarly, the connections of the Pins for the signals REQ2 and GNT2, REQ3 and GNT3, REQ4 and GNT4 of the slot 11-1 are made to the other slots 11-2ö11-5.

Finally, not illustrated in Figures, the PIN for the signal IDSEL of the first slot 11-1 is connected, in the same way as defined by the CompactPCI™ specifications for the Peripheral Slots, to the PIN for the signal AD25, in such a way that even a peripheral module may be accommodated in the first slot 11-1.

In order to be able to dynamically reconfigure the bus segment 10 into numerous bus segments or sub-segments, in accordance with this invention, it must be possible to suitably control all of the connections, both the bus type connections, not depicted in the figures, and the point-to-point connections 21, 22, 23 (Fig.2, Fig.3 and Fig.4) between the Pins for the signals CLK#, INTAöD and REQ# GNT#.

In particular, located between the slots 12-1 and 12-2, 12-2 and 12-3, 12-3 and 12-4 and 12-4 and 12-5 respectively, the bus segment 10, in accordance with this invention, comprises a plurality of electronic switches 24-1, 24-2, 24-3 and 24-4 suitable for simultaneously interrupting all the connections, whether bus or point-to-point type, between one slot and another.

The interconnection circuit 10 also comprises a control unit 25 connected to the switches 24-1ö24-4 and suitable both for memorising information and programs developed in the stage of designing the circuit 10 itself and also for selectively commanding one or more of the switches 24-1ö24-4 to interrupt or restore the connections between the slots.

Finally the interconnection circuit 10 comprises a known type interface device 27, connected to the control unit 25, for receiving data and commands from external devices.

The electronic switches 24-1ö24-4 could, for example, be the high speed components, model QS32384 made by the Quality Semiconductor company.

The control unit 25 could, for example, be the microprocessor model 80C51 produced by the INTEL company.

Operation of the interconnection circuit 10 described up to this point is as follows.

In the event that the System Slot is slot 11-1, the signals CLK#, INTAöD and REQ# GNT# are handled in the same way as established by the CompactPCI™ specifications.

If the System Slot is assigned to a different slot, for example to slot 11-3, once again the signals CLK#, INTAöD, REQ# GNT# and IDSEL are handled in the same way as established by the CompactPCI™ specifications.

In fact the signal CLK#, in accordance with the specifications, is generated by the system module on the pins for the signals CLK1, CLK2, CLK3 and CLK4 and is transmitted to the Peripheral Slots 11-1, 11-2, 11-4 and 11-5, from where it is sent to the PIN for the signal CLK of each of the slots by means of the connections 21aö21e.

Similarly the signal INTA which is generated, in accordance with the CampactPCI™ specifications, by each peripheral module and transmitted to the system module, will be received in the System Slot 11-3 on the pins for INTB and INTC as regards the slots 11-4 and 11-5 respectively and on the pins for INTD and INTC respectively as regards the slots 11-2 and 11-1.

In the same way, the connection request signals REQ# generated by each peripheral module on the PIN for the signal REQ0 will be received by the system module on the PIN for REQ1 for the slot 11-4, on the PIN for REQ2 for the slot 11-5, on the PIN for REQ4 for the slot 11-2 and on the PIN for REQ3 for the slot 11-1, thus maintaining correspondence with the signals INT# already described.

Moreover, the signal IDSEL is handled in such a way in the first slot 11-1 that a peripheral module may be inserted therein.

Therefore all the point-to-point signals described, whatever the position of the system module, will be handled and the relative position of each peripheral module with respect to the system module may easily be reconstructed through suitable tables memorised, for example, in the control circuit 25.

Additionally, in accordance with one of the characteristics of this invention, by accommodating a system module in the slot 11-1 and one in the slot 11-3 and by commanding, by means of the control unit 25, the opening for example of the electronic switch 24-2, from a bus segment 10 having 5 slots, it is possible to obtain two bus segments, the first having two slots, 11-1 and 11-2, and the second three slots, 11-3, 11-4 and 11-5.

Naturally, through the control and activation of the electronic switches, a plurality of segments may be obtained from a single bus segment.

It is also clear that the interconnection circuit 10 according to this invention may be used to produce redundant systems.

To this end, by placing for example a first system module in the slot 11-1 and a second system module in the slot 11-5, it is possible to operate the entire bus segment either under the control of the first system module or, alternatively, under the control of the second, by suitably activating the electronic switches 24-1 and 24-4.

In accordance with a second embodiment, not illustrated in Fig.2, the electronic switches 24-1ö24-4 of the clock signals, CLK1öCLK4, are controlled selectively and independently, in order to avoid problems of attenuation on the connections 21a-21e on account of reflections on the bus type connections 21.

In accordance with a third embodiment, not illustrated in Fig.2 and as an alternative to the above example, the electronic switches 24-1ö24-4 of the clock signals, CLK1öCLK4, are switched upon loads having an impedance corresponding to the characteristic impedance of the bus type connections 21.

In accordance with a fourth embodiment, not illustrated in Fig.2 and as an alternative to the above examples, the signal CLK is generated, not by the connections 21aö21e, but by independent connections coming from the control circuit 25 and controlled by the system module of each bus segment.

In accordance with yet another variant, the control unit 25 of the interconnection circuit 10 (Fig.2, Fig.3 and Fig.4) may be produced by using the logic circuitry present on a system module and by programming it appropriately. In this case, it is not necessary for a control unit or an interface device to be present on the interconnection circuit 10. Naturally, in an embodiment of this kind, the system module accordingly produced will act as a supervisor of the interconnection circuit 10 as a whole.

Though the description refers to the CompactPCI™ specifications, it is clear that the embodiment described may easily be extended to interconnection circuits of any type, with any number of slots, with one or more slots assigned for system modules.

Changes may be made to the dimensions, shapes, materials, components, circuit elements, connections and contacts, as also to the details of the circuitry, method of construction and method of operation without exiting from the scope of the invention.

## Claims

1. Interconnection circuit for electronic modules both system and peripheral type, comprising
- a support (12) suitable for constituting a data and/or commands channel (bus) segment;
- a plurality of connectors (11-1ö11-5) each associated to a plurality of connection points (14) and each suitable for accommodating an electronic module;
- interconnection means for interconnecting said connection points; and
- electronic switching means (24-1ö24-4) for interrupting the connection made by said interconnection means;
**characterised in that**
- said interconnection means comprises
- bus type interconnection means for sequentially interconnecting bus type connection points of said plurality of connectors (11-1ö11-5); and
- point-to-point interconnection means (21ö23) substantially routed as bus type interconnection means for sequentially interconnecting point-to-point connection points (14) of said plurality of connectors (11-1ö11-5);
and **in that**
- said electronic switching means (24-1ö24-4) are interposed between said connectors (11-1ö11-5) for selectively interrupting the connection made by said interconnection means and selectively obtaining from said bus segment a plurality of sub-segments, each comprising a subset of said connectors (11-1ö11-5) and at least a system module.

2. Interconnection circuit according to Claim 1 **characterised in that**
- said electronic switching means (24-1ö24-4) comprises a plurality of groups of electronic switches each located between each couple of said connectors (11-1ö11-5).

3. Interconnection circuit according to Claim 2 **characterised in that** said electronic switches comprise one to one switches.

4. Interconnection circuit according to claim 1, 2 or 3 **characterised in that**
- control means (25) are provided for selectively controlling said electronic switching means (24-1ö24-4).

5. Interconnection circuit according to claim 1 or 2 **characterised in that**
- said point-to-point connecting means are suitable for exchanging point-to-point type signals (CLK#, INT#, REQ#, GNT#) including timing or clock signals, interrupt signals, connect request signals and request acknowledge signals.

6. Interconnection circuit according to claim 1 or 2 **characterised in that**
- said interconnection means are in compliance with the CompactPCI™ Interconnection Standard.

## Patentansprüche

1. Verbindungsschaltung für elektronische Module mit System- und Periphermodulen, bestehend aus
- einer Unterlage (12), um einen Daten- und/oder Befehlskanal (Bus)-Segment zu bilden,
- mehreren Steckverbindern (11-1 bis 11-5), die jeweils mehreren Anschlußstellen (14) zugeordnet sind und ein elektrisches Modul aufnehmen können,
- einer Verbindungseinrichtung zur Verbindung der Anschlußstellen, und
- elektronischen Schalteinrichtungen (24-1 bis 24-4) zum Unterbrechen der durch die Verbindungseinrichtung hergestellten Verbindung,
**dadurch gekennzeichnet, daß**
- die Verbindungseinrichtung aufweist
- Verbindungsmittel vom Bustyp zur sequentiellen Verbindung von Anschlußstellen des Bustyps der Steckverbinder (11-1 bis 11-5), und
- Punkt-zu-Punkt-Verbindungsmittel (21 bis 23), die im wesentlichen als Verbindungsmittel vom Bustyp zur sequentiellen Verbindung von Punkt-zu-Punkt-Verbindungsstellen (14) der Steckverbinder (11-1 bis 11-5) betrieben werden,
und daß
- die elektronischen Schalteinrichtungen (24-1 bis 24-4) zwischen die Steckverbinder (11-1 bis 11-5) zur selektiven Unterbrechung der Verbindung geschaltet sind, die durch die Verbindungsmittel hergestellt wird, und zum selektiven Empfang vom Bussegment mehrerer Untersegmente, von denen jedes eine Untergruppe der Steckverbinder (11-1 bis 11-5) und wenigstens ein Systemmodul umfaßt.

2. Verbindungsschaltung nach Anspruch 1
**dadurch gekennzeichnet, daß**
- die elektronische Schalteinrichtung (24-1 bis 24-4) mehrere Gruppen elektronischer Schalter aufweist, von denen sich jeder zwischen je zwei der Steckverbinder (11-1 bis 1-5) befindet.

3. Verbindungsschaltung nach Anspruch 2
**dadurch gekennzeichnet, daß**
die elektrischen Schalter Eins-zu-Eins-Schalter umfassen.

4. Verbindungsschaltung nach Anspruch 1, 2 oder 3
**dadurch gekennzeichnet, daß**
- Steuereinrichtungen (25) zum selektiven Steuern der elektronischen Schalteinrichtung (24-1 bis 24-4) vorgesehen sind.

5. Verbindungsschaltung nach Anspruch 1 oder 2
**dadurch gekennzeichnet, daß**
- die Punkt-zu-Punkt-Verbindungseinrichtungen Signale (CLK#, INT#, REQ#, GNT#) vom Punkt-zu-Punkt-Typ einschließlich Zeitsteuer- oder Taktsignale, Unterbrechungssignale, Verbindungssignale und Anforderungsanerkennungssignale austauschen können.

6. Verbindungsschaltung nach Anspruch 1 oder 2
**dadurch gekennzeichnet, daß**
- die Verbindungseinrichtungen dem im CompactPCI™ Interconnection Standard entsprechen.

## Revendications

1. Circuit d'interconnexion pour des modules électroniques, à la fois du type système et périphérique, comprenant
un support (12) convenable pour constituer un segment de canal (bus) de données et/ou de commande ;
une pluralité de connecteurs (11-1 à 11-5) associés chacun à une pluralité de points de connexion (14) et convenant chacun pour recevoir un module électronique ;
des moyens d'interconnexion pour interconnecter lesdits points de connexion ; et
des moyens de commutation électroniques (24-1 à 24-4) pour interrompre la connexion réalisée par lesdits moyens d'interconnexion ;
**caractérisé en ce que**
lesdits moyens d'interconnexion comprennent
des moyens d'interconnexion du type bus pour interconnecter en séquence des points de connexion de type bus de ladite pluralité de connecteurs (11-1 à 11-5); et
des moyens d'interconnexion point à point (21 à 23) acheminés sensiblement comme des moyens d'interconnexion du type bus pour interconnecter en séquence des points de connexion point à point (14) de ladite pluralité de connecteurs (11-1 à 11-5);
et **en ce que**
lesdits moyens de commutation électroniques (24-1 à 24-4) sont intercalés entre lesdits connecteurs (11-1 à 11-5) pour interrompre de manière sélective la connexion réalisée par lesdits moyens d'interconnexion et obtenir de manière sélective à partir dudit segment de bus une pluralité de segments secondaires, comprenant chacun un sous-ensemble desdits connecteurs (11-1 à 11-5) et au moins un module de système.

2. Circuit d'interconnexion selon la revendication 1, **caractérisé en ce que**
lesdits moyens de commutation électroniques (24-1 à 24-4) comprennent une pluralité de groupes de commutateurs électroniques situés chacun entre chaque couple desdits connecteurs (11-1 à 11-5).

3. Circuit d'interconnexion selon la revendication 2, **caractérisé en ce que** lesdits commutateurs électroniques comprennent un ou deux commutateurs.

4. Circuit d'interconnexion selon la revendication 1, 2 ou 3, **caractérisé en ce que**
des moyens de commande (25) sont prévus pour commander de manière sélective lesdits moyens de commutation électroniques (24-1 à 24-4).

5. Circuit d'interconnexion selon la revendication 1 ou 2, **caractérisé en ce que**
lesdits moyens de connexion point à point conviennent pour échanger des signaux du type point à point (CLK#, INT#, REQ#, GNT#) comportant des signaux de synchronisation ou d'horloge, dés signaux d'interruption, des signaux de demande de connexion et des signaux d'acquittement de requête.

6. Circuit d'interconnexion selon la revendication 1 ou 2, **caractérisé en ce que**
lesdits moyens d'interconnexion sont conformes à la norme CompactPCI* Interconnection Standard.
